# EUROPEAN PATENT SPECIFICATION

(11) **EP 3 110 624 B1**
(45) Date of publication and mention of the grant of the patent: **19.01.2022**
(21) Application number: 15755005.4
(22) Date of filing: 24.02.2015
(51) Int. Cl.: B32B 25/10, B32B 37/02, E04C 2/04, E04C 2/06, E04C 2/24, E04B 9/04

(54) **METHOD OF MAKING FIBER-REINFORCED COATED MAT-FACED PANELS**
VERFAHREN ZUM HERSTELLEN VON FASERVERSTÄRKTEN MATTENBEDECKTEN PLATTEN
PROCÉDÉ POUR FAIRE DES PANNEAUX DE FACE DE TAPIS REVÊTUS D'UN REVÊTEMENT RENFORCÉ DE FIBRES

(30) Priority: 27.02.2014 US 201461945436 P
(43) Date of publication of application: 04.01.2017
(73) Proprietor: Georgia-Pacific Gypsum LLC, Atlanta, GA 30303 (US)
(72) Inventor: TENG, Yi-Hsien Harry, Duluth, Georgia 30096 (US); GRAN, Martin L., Atlanta, Georgia 30305 (US); DILLER, Charles E., Lawrenceville, Georgia 30044 (US); SANDERS, Christopher J., Southaven, Mississippi 38672 (US); FIELDS, Jeffery T., Suwanee, Georgia 30024 (US); WU, Mianxue, Suwanee, Georgia 30024 (US)
(74) Representative: Michalski Hüttermann & Partner Patentanwälte mbB
(86) International application number: PCT/US2015/017261
(87) International publication number: WO 2015/130658

(56) References cited:
- CN-U- 201 874 115
- US-A- 4 265 979
- US-A1- 2004 209 074
- US-A1- 2009 124 151
- US-A1- 2009 124 151
- US-A1- 2009 208 714
- US-A1- 2012 088 874
- US-A1- 2012 088 874
- US-B2- 6 706 147
- US-B2- 7 049 251
- US-B2- 7 553 780

## Description

### FIELD OF THE DISCLOSURE

The present invention relates generally to the method of making mat-faced panels having a fiber-reinforced coating.

### BACKGROUND

Wall boards, such as gypsum or foam board panels, are used in building construction to form the partitions or walls of rooms, hallways, ceilings, and the like. Similar boards are also used in exterior wall or roof construction, such as sheathing or roof deck. These panels may include mats, such as fiberglass or other woven or non-woven mats, on one or both faces to enhance the material or performance properties of the board, such as board strength or moisture or mold resistance. For example, these mats may be used in place of traditional paper facings. In addition, fiberglass or other woven or non-woven mats are used by laminating or impregnating with membranes or tiles for roofing, flooring, and ceiling applications,

Accordingly, it would be desirable to provide mats and mat-faced panels having improved properties and methods for producing such improved mats and mat-faced panels and other materials.

Aspects similar to the subject matter are disclosed in US application US 2009/124151 A1. This application discloses an aqueous binder compositions for fiber mats which include a urea-formaldehyde resin and an aqueous emulsion of a copolymer prepared by polymerization of a monomer mixture including styrene, an alkyl(meth)acrylate, acrylonitrile, and an unsubstituted or substituted acrylamide. Even when used in relatively low concentration, the copolymer provides improved physical properties to the fiber mat. The fiber mats can be used in composite flooring, asphalt roofing shingles, siding, and dry wall.

### SUMMARY

According to the invention, a method of making a fiber-reinforced coated mat-faced panel according to independent claim 1 is provided, including applying a fiber-reinforced coating to a first surface of a first mat to form a coated first fibrous mat prior drying the first fibrous mat, drying the coated first mat to cure the fiber-reinforced coating, and combining the first mat with a panel material to form a mat-faced panel.

### BRIEF DESCRIPTION OF THE DRAWINGS

Referring now to the drawings, which are meant to be exemplary and not limiting, and wherein like elements are numbered alike:

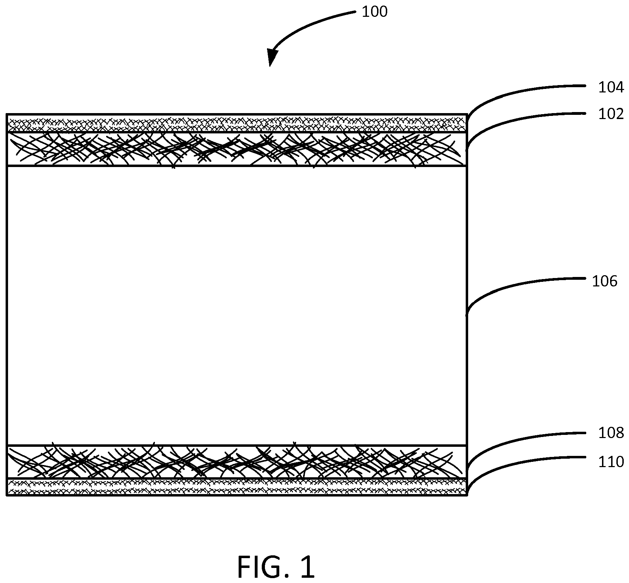

FIG. 1 is a cross-sectional view of a fiber-reinforced coated mat-faced panel.

### DETAILED DESCRIPTION

Disclosed herein are fiber-reinforced coated mats and mat-faced panels and methods for manufacturing such mats and panels. These fiber-reinforced coated mats and panels provide one or more improvements over known mats and mat-faced panels, such as: (i) enhanced mat strength and toughness, (ii) improved mat coating coverage and uniformity, (iii) improved mat surface smoothness and hand feel, (iv) reduced bleeding of panel core materials or adhesives through the mat, (v) decreased water penetration and absorption in panel core materials, (vi) reduced water erosion of panel core material and risk of weathering failure, (vii) improved overall board strength and toughness, (viii) improved surface abrasion resistance, and (ix) enhanced bonding between the mat and the panel core material.

### MATS & PANELS

As shown in **FIG. 1****,** a fiber-reinforced coated mat-faced panel **100** includes a first mat **102** with a first surface and a second surface, the first mat having a fiber-reinforced coating **104** on the first surface, and a panel material **106** in contact with the second surface of the first mat **102.** The fiber-reinforced coated mat includes a first mat with a first surface and a second surface, the first mat having a fiber-reinforced coating on the first surface. The fiber-reinforced coated mat is combined with a panel material to form the facing material for gypsum.

In certain embodiments, the panels have a thickness from about ¼ inch to about 1 inch. For example, the panels may have a thickness of about ½ inch, about 5/8 inch, about ¾ inch, or about ⁷/₈ inch. In certain embodiments, the panels may be much thicker than 1 inch.

The panel material, also referred to as a core herein, is gypsum. For example, the gypsum core may be similar to those used in other gypsum products, such as gypsum wallboard, dry wall, gypsum board, gypsum lath, and gypsum sheathing. For example, the gypsum core may be formed by mixing water with powdered anhydrous calcium sulfate or calcium sulfate hemihydrate, also known as calcined gypsum, to form an aqueous gypsum slurry, and thereafter allowing the slurry mixture to hydrate or set into calcium sulfate dihydrate, a relatively hard material. The gypsum core may include about 80 weight percent or above of set gypsum (i.e., fully hydrated calcium sulfate). For example, the gypsum core may include about 95weight percent set gypsum. The gypsum core may also include a variety of additives, such as accelerators, set retarders, foaming agents, and dispersing agents.

In certain embodiments, the core also includes reinforcing fibers, such as chopped glass fibers. For example, a gypsum core may include up to about 1 pound of reinforcing fibers per 100 square feet of panel. For example, a gypsum core may include about 0.3 pounds of reinforcing fibers per 100 square feet of panel. These reinforcing fibers may have a diameter between about 10 and about 17 microns and have a length between about 6.35 and about 12.7 millimeters (1/4 to 1/2 inch).

A core may also include an additive that improves the water-resistant properties of the core. Such additives may include, for example, poly(vinyl alcohol), optionally including a minor amount of poly(vinyl acetate); metallic resinates; wax, asphalt, or mixtures thereof, for example as an emulsion; a mixture of wax and/or asphalt and cornflower and potassium permanganate; water insoluble thermoplastic organic materials such as petroleum and natural asphalt, coal tar, and thermoplastic synthetic resins such as poly(vinyl acetate), poly(vinyl chloride), and a copolymer of vinyl acetate and vinyl chloride, and acrylic resins; a mixture of metal rosin soap, a water soluble alkaline earth metal salt, and residual fuel oil; a mixture of petroleum wax in the form of an emulsion and either residual fuel oil, pine tar, or coal tar; a mixture of residual fuel oil and rosin; aromatic isocyanates and diisocyanates; organopolysiloxanes; siliconates; a wax emulsion and a wax-asphalt emulsion, each optionally with potassium sulfate, alkali, or alkaline earth aluminates, and Portland cement; a wax-asphalt emulsion prepared by adding to a blend of molten wax and asphalt, an oil-soluble, water-dispersing emulsifying agent, and admixing the aforementioned with a solution of case including, as a dispersing agent, an alkali sulfonate of a polyarylmethylene condensation product. Mixtures of these water-resistance additives may also be employed. For example, a mixture of two or more of: poly(vinyl alcohol), siliconates, wax emulsion, and wax-asphalt emulsion of the aforementioned types, may be used to improve the water resistance of the core.

In certain embodiments, the gypsum core has a density from about 130 pounds per 100 square feet to about 300 pounds per 100 square feet. For example, the core may have a density of about 135 pounds per 100 square feet. In certain embodiments, the gypsum core includes a first gypsum layer in contact with the second surface of the first mat and a second gypsum layer having a lower density than the first gypsum layer and in contact with the first gypsum layer and the second surface of the second mat. For example, the first gypsum layer may be a densified gypsum layer having a density about 15 to about 25 percent greater than the density of the second gypsum layer. The gypsum core may also include a third gypsum layer in contact with the second surface of the second mat and the second gypsum layer, which may have a lower density than the first or third gypsum layer. For example, the third gypsum layer may be of the same, higher, or lower density than the first gypsum layer.

In one embodiment, the panel material includes a higher density panel material in contact with the second surface of the first mat and a lower density panel material in contact with the higher density panel material opposite the first mat. In one embodiment, the panel material includes a first layer of a higher density panel material in contact with the second surface of the first mat and a lower density panel material in contact with the first layer of the higher density panel material opposite the first mat, and a second layer of a higher density panel material in contact with the second surface of the second mat and in contact with the lower density panel material opposite the first layer of the higher density panel material.

One or both faces of the panel core material may be faced with a suitable mat. As shown in **FIG. 1****,** in certain embodiments, both surfaces of the panel material **106** are faced with coated fibrous mats **102, 108**. The mats **102, 108** are enmeshed or entangled with the panel material **106** at the surface interfaces. That is, while the panel material, mats, and coatings are shown as separate layers in the figure, it should be understood that overlap of these layers occurs at the layer interfaces.

For example, the may be a woven or non-woven fibrous mat. In certain embodiments, the fibrous mat includes glass fibers, carbon fibers, ceramic fibers, polymer fibers, or a combination thereof. For example, the fibers may have a length of at least ¼ inch. In certain embodiments, the mats include a non-woven mat of fiber material that is capable of forming a strong bond with the set gypsum of a gypsum core through a mechanical-like interlocking between the interstices of the fibrous mat and portions of the gypsum core. Examples of fiber materials for use in non-woven mats include inorganic materials such as glass fibers, synthetic resin fibers, and mixtures or blends thereof. Both chopped strands and continuous strands may be used.

In certain embodiments, the mats are non-woven fiberglass mats. For example, the glass fibers may an average diameter from about 9 to about 17 microns and an average length from about ¼ inch to about 1.5 inch. For example, the glass fibers may have an average diameter of 13 microns (i.e., K fibers) and an average length of ¾ inch. In certain embodiments, the non-woven fiberglass mats have a basis weight from about 1.2 pounds to about 3.0 pounds per 100 square feet of the mat. The mats may each have a thickness from about 20 mils to about 26 mils. In certain embodiments, a blend of the above-mentioned fibers and fibers in smaller diameters (< 8 microns in nominal) is used in forming the mat. In certain embodiments, the first mat includes a blend of fibers and microfibers. For example, the fibers may have an average diameter from about 9 to about 17 microns and an average length from about ¼ inch to about 1.5 inch, while the microfibers may have a diameter from about 1 to about 6 microns.

In certain embodiments, fibers may be bonded together to form a unitary mat structure by a suitable adhesive binder. For example, the adhesive may be a urea-formaldehyde resin adhesive, optionally modified with a thermoplastic extender or cross-linker, such as an acrylic cross-linker, or an acrylate adhesive resin.

The mats include a fiber-reinforced coating on one or both mat surfaces. For example, as shown in **FIG. 1****,** the first and second mats **102, 108** may each be coated with a fiber-reinforced coating **104, 110** on the surface of the mat opposite the panel material **106.** In one embodiment, the panel includes a second mat having a first surface and a second surface, the second mat comprising a fiber-reinforced coating on the first surface, wherein the second surface of the second mat is in contact with the panel material on a side opposite the first mat. The fiber-reinforced coating includes fibers and a coating base. In one embodiment, the coating base includes resin, latex, or a combination thereof. For example, the coating base may include any suitable adhesive binder material known to those of ordinary skill in the art.

For example, the binder may be an acrylic emulsion, styrene-butadiene-rubber (SBR), styrene-butadiene-styrene (SBS), ethylene-vinyl-chloride (EVCl), poly-vinylidene-chloride (PVdCl) and poly(vinylidene) copolymers, modified poly-vinyl-chloride (PVC), poly-vinylalcohol (PVOH), ethylene-vinyl-acetate (EVA), poly-vinyl-acetate (PVA) and polymers and copolymers containing units of acrylic acid, methacrylic acid, their esters and derivatives thereof (acrylic-type polymers), such as styrene-acrylate copolymers. In one embodiment, the binder is a hydrophobic, UV resistant polymer latex binder. For example, the hydrophobic, UV resistant polymer latex binder adhesive may be based on a (meth)acrylate polymer latex, wherein the (meth)acrylate polymer is a lower alkyl ester, such as a methyl, ethyl or butyl ester, of acrylic and/or methacrylic acids, and copolymers of such esters with minor amounts of other ethylenically unsaturated copolymerizable monomers (such as stryrene) which are known to the art to be suitable in the preparation of UV resistant (meth)acrylic polymer latexes.

The fiber-reinforced coating contains fibers selected from the group consisting of: glass fibers, fire resistant or flame retardant polymer fibers, single-crystal calcium sulfate anhydrite whiskers, single-crystal magnesium aluminate whiskers, single-crystal magnesium silicate whiskers, single-crystal calcium silicate whiskers, or combinations thereof.

The fibers of the fiber-reinforced coating may have any suitable length and geometry. For example, the fibers may have a nominal length from about 1/16 inch to 1.5 inch, or from about ¼ inch to about ½ inch. For example, the fibers may have a nominal diameter from about 1 micron to about 50 microns, or from about 5 microns to about 25 microns. In one embodiment, the fiber-reinforced coating contains fibers in an amount from about 0.01 weight percent to about 5 weight percent of the coating, on a wet basis. In one embodiment, the fiber-reinforced coating contains fibers in an amount from about 1 weight percent to about 5 weight percent of the coating, on a wet basis. In one embodiment, the fiber-reinforced coating contains fibers in an amount from about 1 weight percent to about 3 weight percent of the coating, on a wet basis. In certain embodiments, the first and/or second mats are fibrous mats having fibers with a longer average length than the fibers of the fiber-reinforced coating. That is, the fiber-reinforced coating may contain short fibers, relative to the fibrous mat(s) to which the coating is applied. The fiber-reinforced coating may also contain fibers having equal or longer lengths than the fibers in the fibrous mat substrate. In one embodiment, the reinforcing fibers have an aspect ratio of at least 10.

The fiber-reinforced coating may also contain water and/or other optional ingredients such as colorants (e.g., dyes or pigments), thickeners or rheological control agents, defoamers, dispersants, fire retardants, biocides, and water repellants. In one embodiment, the fiber-reinforced coating includes pigments, fillers, or combinations thereof. In certain embodiments, colored or painted fibers, flakes, or glitters are used instead of or in combination with pigments or colorants in the fiber-reinforced coatings. The colored glitters can provide special visual or reflectivity effects.

In certain embodiments, the filler of the mat coating is an inorganic, mineral filler. For example, the filler may be ground limestone (calcium carbonate), clay, sand, mica, talc, gypsum (calcium sulfate dihydrate), aluminum trihydrate (ATH), antimony oxide, or any combination thereof. The filler may be in a particulate form. For example, the filler may have a particle size such that at least 95% of the particles pass through a 100 mesh wire screen.

In certain embodiments, the filler may inherently contain a naturally occurring inorganic adhesive binder. For example, the filler may be limestone containing quicklime (CaO), clay containing calcium silicate, sand containing calcium silicate, aluminum trihydrate containing aluminum hydroxide, cementitious fly ash, or magnesium oxide containing either the sulfate or chloride of magnesium, or both. In certain embodiments, the filler may include an inorganic adhesive binder as a constituent, cure by hydration, and act as a flame suppressant. For example, the filler may be aluminum trihydrate (ATH), calcium sulfate (gypsum), and the oxychloride and oxysulfate of magnesium.

Fillers may include inorganic, mineral fillers, such as sodium-potassium alumina silicates, microcrystalline silica, talc (magnesium silicate), and other fillers known to those of ordinary skill in the art. For example, fillers may include MINEX 7, commercially available from the Cary Company (Addison, IL); IMSIL A-10, commercially available from the Cary Company; and TALCRON MP 44-26, commercially available from Specialty Minerals Inc. (Dillon, MT).

The fiber-reinforced coating may contain any combination of: water, one or more thickeners, one or more surfactants, one or more defoamers, one or more ammonia compositions, one or more fillers, one or more biocide compositions, one or more latex compositions, one or more transfer agents, and one or more UV absorbers.

Thickeners may include hydroxyethyl cellulose; hydrophobically modified ethylene oxide urethane; processed attapulgite, a hydrated magnesium aluminosilicate; and other thickeners known to those of ordinary skill in the art. For example, thickeners may include CELLOSIZE QP-09-L and ACRYSOL RM-2020NPR, commercially available from Dow Chemical Company (Philadelphia, PA); and ATTAGEL 50, commercially available from BASF Corporation (Florham Park, NJ).

Surfactants may include sodium polyacrylate dispersants, ethoxylated nonionic compounds, and other surfactants known to those of ordinary skill in the art. For example, surfactants may include HYDROPALAT 44, commercially available from BASF Corporation; and DYNOL 607, commercially available from Air Products (Allentown, PA).

Defoamers may include multi-hydrophobe blend defoamers and other defoamers known to those of ordinary skill in the art. For example, defoamers may include FOAMASTER SA-3, commercially available from BASF Corporation.

Ammonia compositions may include ammonium hydroxide, for example, AQUA AMMONIA 26 BE, commercially available from Tanner Industries, Inc. (Southampton, PA).

Biocides may include broad-spectrum microbicides that prohibit bacteria and funig growth, antimicrobials such as those based on the active diiodomethyl-ptolylsulfone, and other compounds known to those of ordinary skill in the art. For example, biocides may include KATHON LX 1.5 %, commercially available from Dow Chemical Company, POLYPHASE 663, commercially available from Troy Corporation (Newark, NJ), and AMICAL Flowable, commercially available from Dow Chemical Company. Biocides may also act as preservatives.

Latex compositions may include acrylic emulsions, self-crosslinking acrylic emulsions, styrene butadiene, polyvinyl acetate, ethylene vinyl acetate, and other latex polymer or copolymer compounds known to those of ordinary skill in the art, for example, JONCRYL 1987, commercially available from BASF Corporation. In certain embodiments, resinous polymer binders can be used in the fiber-reinforced coatings, such as polyacrylic acid, phenolic resin, urea-formaldehyde, polyvinyl alcohol, and other thermal-set or thermal-plastic resins.

UV absorbers may include encapsulated hydroxyphenyl-triazine compositions and other compounds known to those of ordinary skill in the art, for example, TINUVIN 477DW, commercially available from BASF Corporation.

Transfer agents such as polyvinyl alcohol (PVA) and other compounds known to those of ordinary skill in the art may also be included in the fiber-reinforced coating.

In one embodiment, the fiber-reinforced coating includes about 20% acrylic latex binder, about 3% Kevlar short fiber, about 0.6% inorganic pigment, and about 76% calcium carbonate filler on a dry solid basis. In another embodiment, the fiber-reinforced coating contains about 15% styrene butadiene latex binder, about 2% polyester short fiber, about 2.5% wood cellulose fiber, and about 80% calcium carbonate filler on a dry solid basis. In another embodiment, the fiber-reinforced coating includes about 93% acrylic latex binder, about 2% Kevlar short fiber, 3% gold-colored PET glitter, and about 1.5% ATH flame retardant on a dry solid basis. Percentages used herein are weight percentages, unless otherwise specified.

In certain embodiments, the fiber-reinforced coating has a dry weight from about 5 pounds per thousand square feet to about 100 pounds per thousand square feet of coated mat. For example, the fiber-reinforced coating may have a weight from about 6 pounds per thousand square feet to about 30 pounds per thousand square feet of coated mat. In certain embodiments, the coating slurry contains solids in an amount from about 25 to about 75 weight percent. For example, the coating slurry may contain solids in an amount from about 30 to about 60 weight percent.

The fiber-reinforced coated mat-faced panels may be configured to have certain material properties to keep water, air from permeating the panels. For example, the panel may have a Cobb value below 0.84 grams. In one embodiment, the panel has a Cobb value of 0.5 grams or below. The panel may also have a vapor permeance equal to or greater than 10 perms. The panels may also have additional properties desirable for building materials. For example, the panel may have a class 1 fire rating according to the ASTM E84 standard. The panel may also have a mold growth resistance rating of 10 according to the ASTM D3273 standard.

The fiber-reinforced coating may result in one or more of the following improved mat or panel properties relative to known coated mats and coated mat-faced panels: (i) enhanced mat strength and toughness, (ii) improved mat coating coverage and uniformity, (iii) improved mat surface smoothness and hand feel, (iv) reduced bleeding of panel core materials through the mat, (v) decreased water penetration and absorption in panel core materials, (vi) reduced water erosion of panel core materials and risk of weathering failure, (vii) improved overall board strength and toughness, (viii) improved surface abrasion resistance, and (ix) enhanced bonding between the mat and the panel core material. For example, fiber-reinforced coatings applied to non-woven glass mats tend to penetrate less into the depth of the glass mat, leaving more of the mat open on the uncoated side to allow deeper penetration of the gypsum slurry, thereby enhancing the bond between the coated glass mat and the gypsum core, enhancing finished product strength and toughness. Moreover, deeper penetration of the gypsum slurry into the non-woven glass mat would enhance flexural strengths of the gypsum board panel by providing additional fiber reinforcement to the critical outer regions of the core.

### METHODS

Methods for making a fiber-reinforced coated mat-faced panel are also provided. These methods include applying a fiber-reinforced coating to a first surface of a first mat to form a coated first mat and drying the coated first mat to cure the fiber-reinforced coating and form a fiber-reinforced coated mat. These methods include: (i) applying a fiber-reinforced coating to a first surface of a first mat to form a coated first mat; (ii) drying the coated first mat to cure the fiber-reinforced coating; and (iii) combining the first mat with a panel material to form a mat-faced panel.

The coated mat is often used a continuous carrier facer on which gypsum slurry or foam liquid is poured to form a continuous core material after curing.

The method includes forming the first mat of fibers in a wet-laid process and drying the first mat comprising fibers, wherein applying the fiber-reinforced coating to the first surface of the first mat comprising fibers occurs prior to drying the first mat comprising fibers. For example, the fiberglass, or other mat fibers, are wet-formed into a continuous non-woven web of any workable width, coated with the fiber-reinforced coating, and dried to remove excess water and cure the binder to form a fiberglass mat. In one embodiment, the binder in the coating also serves the binder for the glass mat because of migration of liquid binder across the mat. That is, drying the first mat including fibers and drying the coated first mat to cure the fiber-reinforced coating may occur simultaneously.

In one embodiment, the method includes applying a binder to the first mat comprising fibers prior to drying the first mat comprising fibers.

For example, forming a mat of fibers in a wet-laid process may include dispersing the fibers in an aqueous solution to form a slurry, and applying the slurry on a wire web to drain the liquid medium and form a non-woven first mat comprising the fibers.

Any suitable method may be used to apply a fiber-reinforced coating to the mat, such as roller coating, curtain coating, knife coating, spray coating and the like, including combinations thereof. For example, the coating may be applied in an amount from about 4 to pounds to about 12 pounds of aqueous coating per 100 square feet of mat. Following application of the aqueous coating to the mat, the composition may be dried to cure the coating, usually by heat to form the coated mat. Thus, coated mats may be provided having a dried, adherent coating applied to one of their surfaces. These mats may be substantially liquid impermeable, but allow water vapor to pass through during manufacturing of the panel.

In certain embodiments, a gypsum slurry is applied onto a non-coated surface of a mat as a carrier substrate, i.e., the slurry is applied on a surface of the mat opposite the surface to which the fiber-reinforced coating was applied. In certain embodiments, a gypsum slurry contains excess water (i.e., water in excess of that needed to hydrate the calcined gypsum from which the slurry is made). Reinforcing fibers may also be included in the gypsum slurry. After the panel material slurry is applied onto a second surface of the first mat, the panel material slurry and the first mat are dried to form the mat-faced panel. In certain embodiments, applying the fiber-reinforced coating to the first surface of the first mat occurs after the mat-faced panel is formed, i.e., after the panel material and mat have been combined before or after panel drying. A gypsum sandwich structure (i.e., a gypsum slurry core with one or two mat faces) may be subsequently dried to evaporate the excess water from the gypsum slurry and set the gypsum core.

In one embodiment, the method includes applying a fiber-reinforced coating to a first surface of a second mat to form a coated second mat, drying the coated second mat to cure the fiber-reinforced coating, and combining the second mat with a panel material to form a dual mat-faced panel. In one embodiment, combining the first mat with the panel material includes applying a panel material slurry onto a second surface of the first mat, and combining the second mat with the panel material comprises applying the second mat onto a surface of the panel material slurry opposite the first mat and drying the panel material slurry and the first and second mats to form the dual mat-faced panel. In one embodiment, applying the fiber-reinforced coating to the first surfaces of the first and second mats occurs after the dual mat-faced panel is formed.

The gypsum slurry may be applied on the non-coated side of a horizontally oriented moving web of pre-coated or uncoated mat. A second mat may be applied onto the surface of the slurry opposite the first mat. The mats may both be pre-coated, in which case the surfaces opposite the coated surfaces are contacted to the panel material slurry. For example, another moving web of a mat may be placed on the upper free surface of an aqueous gypsum slurry. The gypsum slurry is sandwiched between the coated fiberglass mats. Using pre-coated fiberglass mats may allow the use of less coating and allow the fiberglass mat to be saturated with a gypsum slurry without excessive bleed through. This saturating helps to insure a maximum bond of the fiberglass mat to the gypsum core.

In certain embodiments, the step of applying the gypsum slurry includes applying a first gypsum slurry onto the surface of the first fiberglass mat, and applying a second gypsum slurry onto the first gypsum slurry, the second gypsum slurry having a lower density than the first gypsum slurry. The step of applying the gypsum slurry may also include applying a third gypsum slurry having greater density than the second slurry onto the surface of the second mat.

In one embodiment, applying the panel material slurry onto the second surface of the first mat includes applying a higher density slurry to the second surface of the first mat and applying a lower density slurry to a surface of the higher density slurry opposite the first mat. In one embodiment, applying the panel material slurry onto the second surface of the first mat includes applying a first layer of a higher density slurry to the second surface of the first mat and applying a lower density slurry to a surface of the first layer of the higher density slurry opposite the first mat, and applying the second mat onto the surface of the panel material slurry opposite the first mat includes applying a second layer of a higher density slurry to a second surface of the second mat and applying the lower density slurry to a surface of the second layer of the higher density slurry opposite the second mat. For example, the higher density slurry may be a slate coat layer. The slate coat layer may be applied to the pre-formed mats prior to application of the lower density panel slurry.

In certain embodiments, the fiber-reinforced coating is applied by spray coating, ribbon coating, knife coating, or direct roll coating the coating on the surface of the mat opposite the gypsum.

Fiber-reinforced coated mat-faced panels may be manufactured on any suitable apparatus known to those of ordinary skill in the art. For example, the apparatus may include a board line for transporting a first mat, a applying mechanism configured to apply a gypsum, or other panel material, slurry onto a surface of the first mat, a conveyor configured to apply a second mat onto a surface of the slurry opposite the first mat, such that a surface of the second mat contacts the slurry. The sandwich structure, i.e., the slurry and two mats, may be transported to a dryer for drying the gypsum sandwich structure, during which the gypsum sets and hardens. For example, the dryer may be an oven operated at a temperature to heat and dry the sandwich structure.

The apparatus may also include a coating applicator, which is configured to apply a fiber-reinforced coating to the surface of the first mat or the second mat opposite the slurry, i.e., the outward-facing surface of the first mat or the second mat. In certain embodiments, the coating applicator is configured to apply the coating to the first mat before the sandwich structure is dried. In some embodiments, applying the coating to the second mat on the top of sandwich is more convenient before the sandwich structure is dried. In alternative embodiments, the coating applicator is configured to apply the coating to the first mat or the second mat after the sandwich structure is dried. In still other embodiments, the coating applicator may be present in an earlier stage of the process, during the mat manufacturing. In these embodiments, the coating applicator may be configured to apply the fiber-reinforced coating before or after drying of the wet mats occurs. For example, the mats may be manufactured from a slurry containing dispersed fibers that is applied on a wire web to drain excess water. Optional additives, such as binders, may be applied to the wet mat, and the fiber-reinforced coating may be applied to a surface of the mat either before or after it is dried.

In certain embodiments, the apparatus includes a transfer mechanism configured to overturn the sandwich structure. In certain embodiments, the apparatus includes a cutting mechanism to cut the continuous sandwich into panels having the desired dimensions. In certain embodiments, a roller or a forming plate compresses the sandwich assembly to the desired thickness. The dry ingredients from which the panel core is formed may be pre-mixed and fed to a mixer, such as a pin mixer. Water and other liquid constituents, such as soap, used in making the core may be metered into the mixer and combined with the desired dry ingredients to form the slurry, (e.g., the aqueous gypsum slurry). Reinforcing fibers may be added to the slurry in the mixer. Foam (e.g., soap) may be added to the slurry in the mixer to control the density of the resulting core and/or gypsum layers. The slurry may be dispersed through one or more outlets from the mixer onto a moving sheet (e.g., non-woven fibrous mat), which is indefinite in length and is fed from a roll thereof onto a board line and advanced by conveyor. Another mat may be fed onto the top of the slurry to form a sandwich structure.

The fiber-reinforced panels disclosed herein may be suitable for use in any applications where mat-faced panels are used, for example in gypsum or other construction boards. Fiber-reinforced coated mat-face panels made by these methods may display one or more of the following improved panel properties relative to known coated mat-faced panels: (i) enhanced mat strength and toughness, (ii) improved mat coating coverage and uniformity, (iii) improved mat surface smoothness and hand feel, (iv) reduced bleeding of panel core materials or adhesives through the mat, (v) decreased water penetration and absorption in panel core materials, (vi) reduced water erosion of panel core material and risk of weathering failure, (vii) improved overall board strength and toughness, (viii) improved surface abrasion resistance, and (ix) enhanced bonding between the mat and the panel core material.

It should be understood that the disclosed fiber-reinforced coatings is used to coat mats for use as a facing material for gypsum.

The fiber-reinforced coatings disclosed herein are used to coat woven or non-woven mats, and contain a fiber or fiber-like material, a binder, and optional additives such as fillers, pigments, dispersants, defoamers, water repellents, thickeners, fire retardants, and flakes. The coating may be applied to a mat formed in a wet-laid process: (i) before drying the mat, such that the coating and mat are cured simultaneously, and then the coated mat is combined with a panel, (ii) after drying the mat, so that the coating is cured before the coated mat is combined with the panel, or (iii) after the mat is combined with the panel, after which the coating is cured. The fiber-reinforced coating may be applied or laminated to one or both surfaces of a board, panel, or membrane continuously or discontinuously. The fiber-reinforced coated mat may be used as a carrier facer for forming the panels continuously or discontinuously.

While the disclosure has been described with reference to a number of embodiments, it will be understood by those skilled in the art that the invention is not limited to such disclosed embodiments. Rather, the invention can be modified to incorporate any number of variations, alterations, substitutions, or equivalent arrangements not described herein, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of making a fiber-reinforced coated mat-faced panel (100), comprising:
forming a first fibrous mat (102) comprising mat fibers in a wet-laid process;
applying a fiber-reinforced coating (104) to a first surface of the first fibrous mat (102) to form a coated first fibrous mat prior to drying the first fibrous mat (102);
drying the coated first fibrous mat to cure the fiber-reinforced coating (104); and
combining the first fibrous mat (102) with a panel material (106) comprising gypsum to form a mat-faced panel,
wherein the fiber-reinforced coating (104) comprises:
coating fibers comprising glass fibers, fire resistant or flame retardant polymer fibers, single-crystal calcium sulfate anhydrite whiskers, single-crystal magnesium aluminate whiskers, single-crystal magnesium silicate whiskers, single-crystal calcium silicate whiskers, or a combination thereof, and
a coating base.

2. The method of claim 1, wherein the coating base comprises resin, latex, or a combination thereof.

3. The method of claim 1, wherein the coating fibers have a nominal length from about 0.159 cm to 3.81 cm (about 1/16 inch to 1.5 inch), and an aspect ratio at least 10.

4. The method of claim 1, wherein the fiber-reinforced coating (104) comprises fibers in an amount from about 0.01 weight percent to about 5 weight percent of the coating, on a wet basis.

5. The method of claim 1, wherein the first fibrous mat (102) comprises a non-woven mat of fibers having a longer average length than the coating fibers of the fiber-reinforced coating (104).

## Patentansprüche

1. Verfahren zur Herstellung einer faserverstärkten, beschichteten, mattenbedeckten Platte (100), umfassend:
Bilden einer ersten Fasermatte (102), die Mattenfasern umfasst, in einem Nassablegeverfahren;
Aufbringen einer faserverstärkten Beschichtung (104) auf eine erste Oberfläche der ersten Fasermatte (102) zur Bildung einer beschichteten ersten Fasermatte vor dem Trocknen der ersten Fasermatte (102);
Trocknen der beschichteten ersten Fasermatte zur Aushärtung der faserverstärkten Beschichtung (104); und
Kombinieren der ersten Fasermatte (102) mit einem Plattenmaterial (106), das Gips umfasst, zur Bildung einer mattenbedeckten Platte,
wobei die faserverstärkte Beschichtung (104) Folgendes umfasst:
Beschichtungsfasern, umfassend Glasfasern, feuerfeste oder flammhemmende Polymerfasern, einkristalline Calciumsulfat-Anhydrit-Whisker, einkristalline Magnesiumaluminat-Whisker, einkristalline Magnesiumsilikat-Whisker, einkristalline Calciumsilikat-Whisker oder eine Kombination davon, und
eine Beschichtungsbasis.

2. Verfahren nach Anspruch 1, wobei die Beschichtungsbasis Harz, Latex oder eine Kombination davon umfasst.

3. Verfahren nach Anspruch 1, wobei die Beschichtungsfasern eine Nennlänge von etwa 0,159 cm bis 3,81 cm (etwa 1/16 Zoll bis 1,5 Zoll) und ein Aspektverhältnis von mindestens 10 aufweisen.

4. Verfahren nach Anspruch 1, wobei die faserverstärkte Beschichtung (104) Fasern in einer Menge von etwa 0,01 Gewichtsprozent bis etwa 5 Gewichtsprozent der Beschichtung, auf nasser Basis, umfasst.

5. Verfahren nach Anspruch 1, wobei die erste Fasermatte (102) eine Vliesmatte aus Fasern umfasst, die eine größere durchschnittliche Länge aufweisen als die Beschichtungsfasern der faserverstärkten Beschichtung (104).

## Revendications

1. Procédé de fabrication d'un panneau de face de tapis revêtu d'un revêtement renforcé de fibres (100), comprenant les étapes consistant à :
former un premier tapis fibreux (102) comprenant des fibres de tapis dans un processus par voie humide ;
appliquer un revêtement renforcé de fibres (104) à une première surface du premier tapis fibreux (102) pour former un premier tapis fibreux revêtu avant de faire sécher le premier tapis fibreux (102) ;
faire sécher le premier tapis fibreux revêtu pour faire durcir le revêtement renforcé de fibres (104) ; et
combiner le premier tapis fibreux (102) avec un matériau de panneau (106) comprenant du gypse pour former un panneau de face de tapis,
dans lequel le revêtement renforcé de fibres (104) comprend :
des fibres de revêtement comprenant des fibres de verre, des fibres polymères résistantes au feu ou retardateurs de flamme, des poils en anhydrite de sulfate de calcium monocristal, des poils en aluminate de magnésium monocristal, des poils en silicate de magnésium monocristal, des poils en silicate de calcium monocristal, ou une combinaison de ceux-ci, et
une base de revêtement.

2. Procédé selon la revendication 1, dans lequel la base de revêtement comprend de la résine, du latex, ou une combinaison de ceux-ci.

3. Procédé selon la revendication 1, dans lequel les fibres de revêtement présentent une longueur nominale d'environ 0,159 cm à 3,81 cm (environ 1/16 pouce à 1,5 pouce), et un rapport hauteur/largeur d'au moins 10.

4. Procédé selon la revendication 1, dans lequel le revêtement renforcé de fibres (104) comprend des fibres dans une quantité d'environ 0,01 pourcent en poids à environ 5 pourcent en poids du revêtement, sur une base humide.

5. Procédé selon la revendication 1, dans lequel le premier tapis fibreux (102) comprend un tapis de fibres non tissé présentant une longueur moyenne supérieure aux fibres de revêtement du revêtement renforcé de fibres (104).
